# EUROPEAN PATENT APPLICATION

(11) **EP 4 660 093 A1**
(43) Date of publication of application: **10.12.2025**
(21) Application number: 24749446.1
(22) Date of filing: 01.02.2024
(51) Int. Cl.: B65D 1/10, B65D 17/34, B65D 43/02, B29C 65/74

(54) **PACKAGING HAVING A HERMETIC CLOSURE WITH A SINGLE DETACHABLE SEAL JOINED BY MEANS OF ULTRASONIC WELDING**

(30) Priority: 03.02.2023 BR 102023002057
(71) Applicant: Pasquali, Flávio, 89814-000 Chapecó (SC) (BR)
(72) Inventor: Pasquali, Flávio, 89814-000 Chapecó (SC) (BR)
(74) Representative: Pereira Garcia, João Luís
(86) International application number: PCT/BR2024/050037
(87) International publication number: WO 2024/159293

(57) **Abstract**

The present invention patent application relates to a packaging having a hermetic closure with a single detachable seal joined by means of ultrasonic welding, which pertains to the field of packaging and closure methods. The receptacle (1) is hermetically closed by means of ultrasonic welding with a breaking point of the weakening line (12) that divides the rim (6) into two parts, wherein one part of the rim (6) encircles the entire circumference of the lid (5) and the other part remains welded to the rim (3), which makes it possible to reuse the lid several times for opening and closing the container.

## Description

### FIELD OF APPLICATION

The present invention patent application refers to a packaging with hermetic closure with a single detachable seal joined by ultrasonic welding, which will be applied to the field of packaging and closure methods.

### STATE OF THE ART

Ultrasonic welding is understood as the ultrasonic welding of thermoplastics by complementary joining or material at the molecular level.

The term packaging will be used as reference to plastic containers of the most varied models. In the current art, containers with lids with closure by means of pressure are commercialized, as presented in patent document BRPI701105-9, this container model does not present security against accidental opening and is contraindicated mainly for packaging liquid or pasty products.

Other containers are presented with lid and lateral seal like the lids used in ice cream containers, as presented in patent documents BRMU8502287-0 and BRMU7601554-8, however these models require the need for special machines for their production and are not indicated for packaging and transport of liquid products.

Other container models are formed by a first threaded lid and internally still present a second tamper-evident lid in the form of a seal, like the one presented in patent document BRPI0702715-5, which for its opening the seal is broken and discarded and the second lid used as the only lid after its opening. This closure model makes the production process costly either by the use of raw material and machinery for its application which results after opening the bottle in waste to be discarded, as well as requires the use of the first lid.

In current models, the use of a single lid that functions as a tamper-evident seal in which the same after being opened can be used again to close the container is not observed.

It is highlighted that this technique became possible through the construction of a lid that fits on the upper part of the container so that it receives an ultrasonic weld hermetically sealing the container, a constructive detail that will be detailed below.

### OBJECTIVES OF THE INVENTION

The objective is to obtain hermetic closure between the lid and the container through an ultrasonic welding process.

Another objective is that the lid after its opening can be used again to close the container.

Another objective is to create a container with a lid that presents a ring to facilitate opening and closing handling.

It is also an objective that the lid can be detached quickly, without jamming or deformations.

Another objective is that the container has only a single closure seal, dispensing with the use of a second tamper-evident lid in the for

### DESCRIPTION OF THE FIGURES

The attached drawing exposes the plastic container with hermetic closure with detachable lid joined by ultrasonic welding, which together with the numerical references detailed below, makes it easier to understand, although this invention is susceptible to realization in many different constructive forms, always customized for each application, not shown in the drawings that will be described here in detail and forms for the realization of said invention.

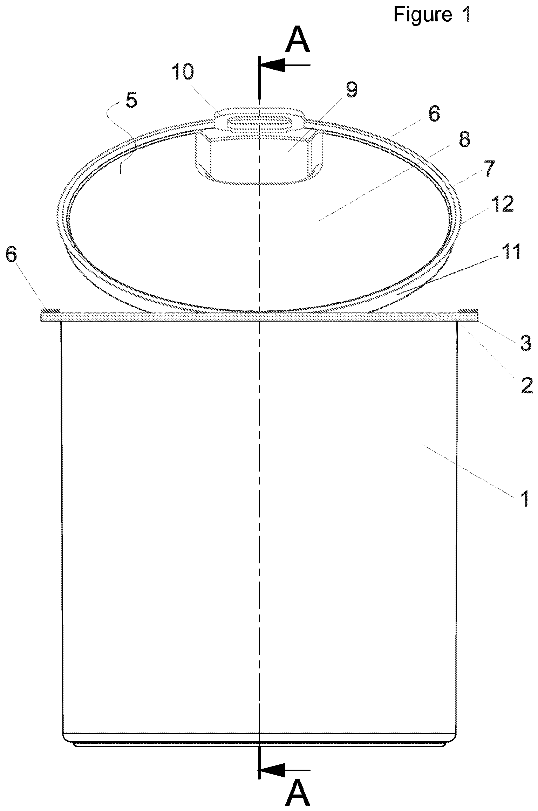

Figure 1 presents a rear perspective view showing the container partially opened.

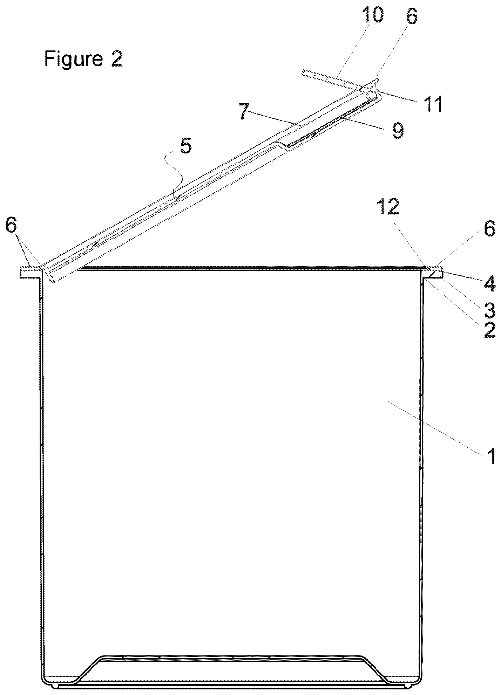

Figure 2 presents a cross-sectional view AA, indicated in figure 1, showing the container partially opened at the rupture point of the weakening line.

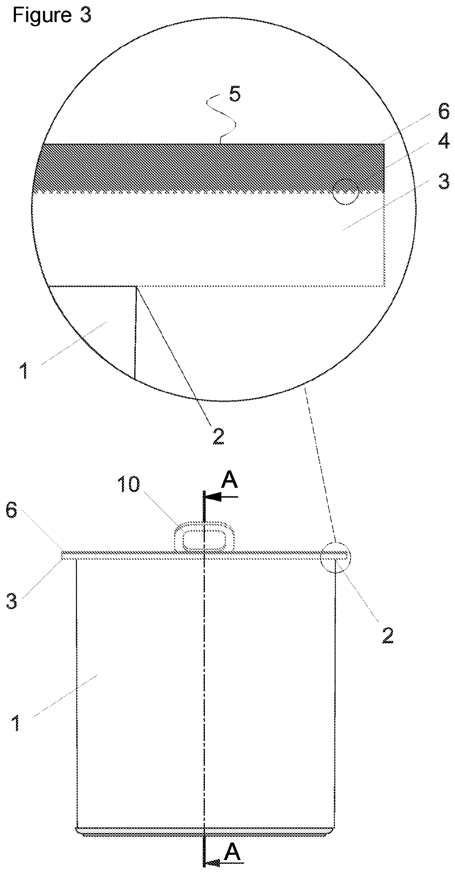

Figure 3 presents a view of the container with enlarged detail to exemplify and indicate the ultrasonic welding line between the lid edge and the container.

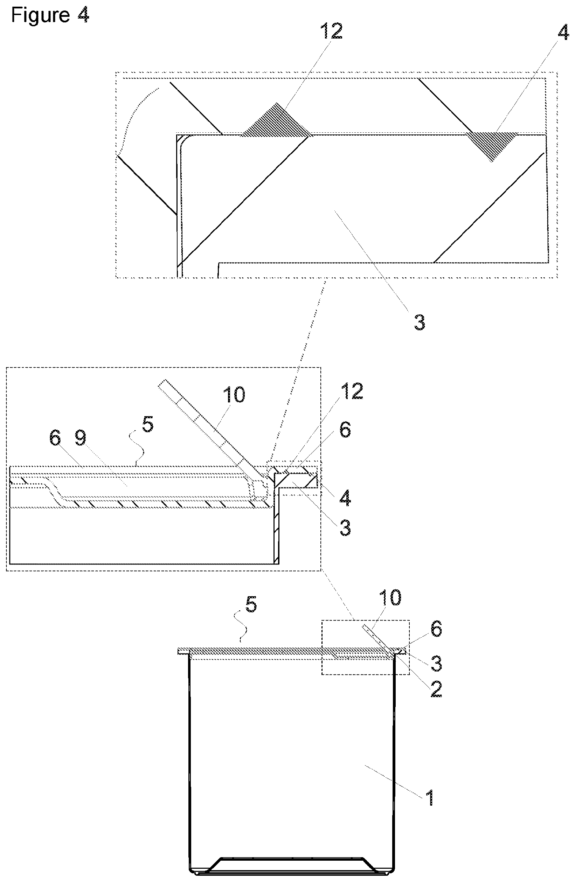

Figure 4 presents a cross-sectional view AA, indicated in figure 3, with enlarged details showing the raised ring and the ultrasonic weld line and weakening line.

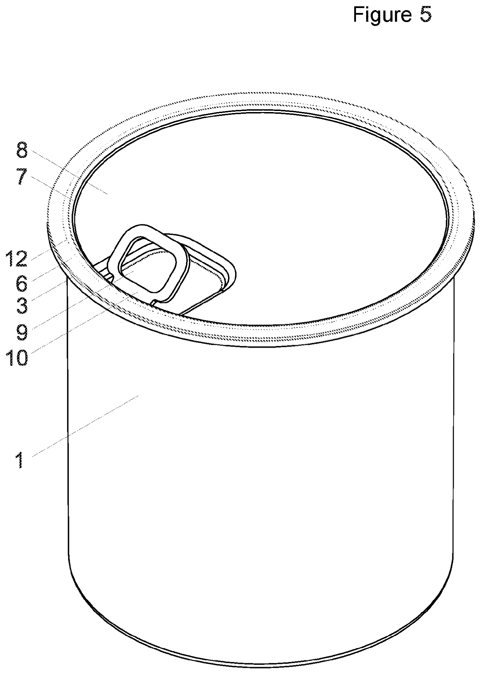

Figure 5 presents a perspective view of the closed container.

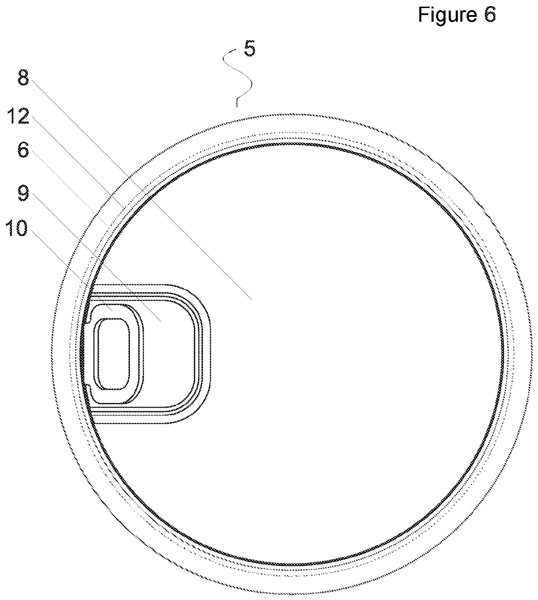

Figure 6 presents a top view.

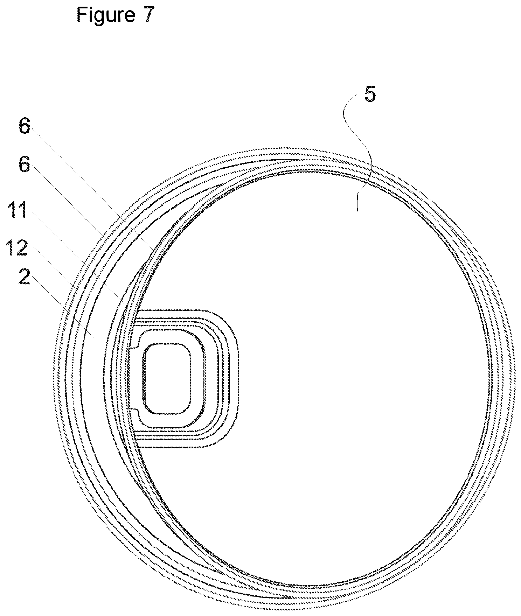

Figure 7 presents a top view of the container with the lid partially opened.

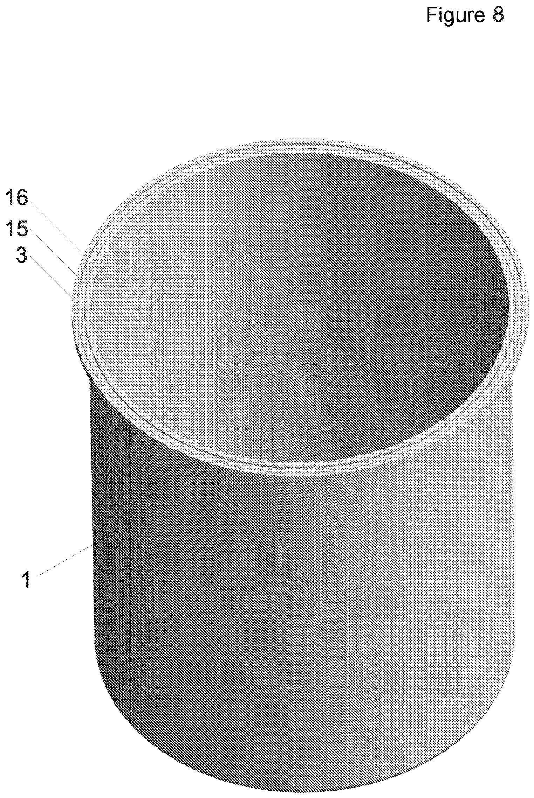

Figure 8 presents a perspective view of the container in an alternative construction, showing a recess in the container flange.

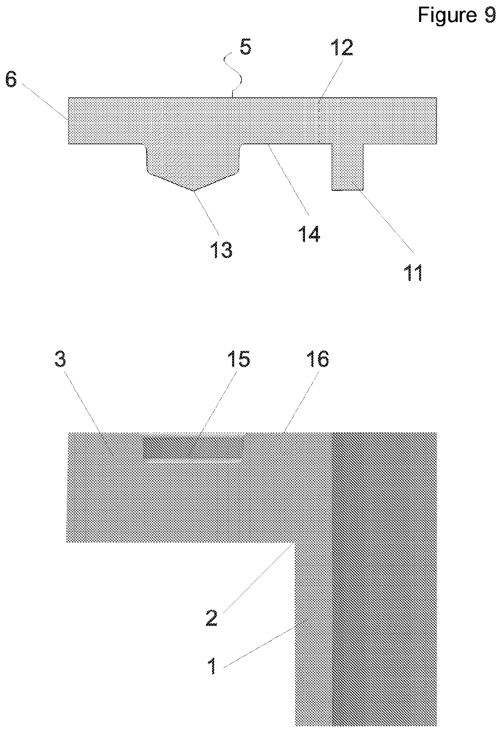

Figure 9 presents a partial exploded view of the lid and container, in its alternative construction.

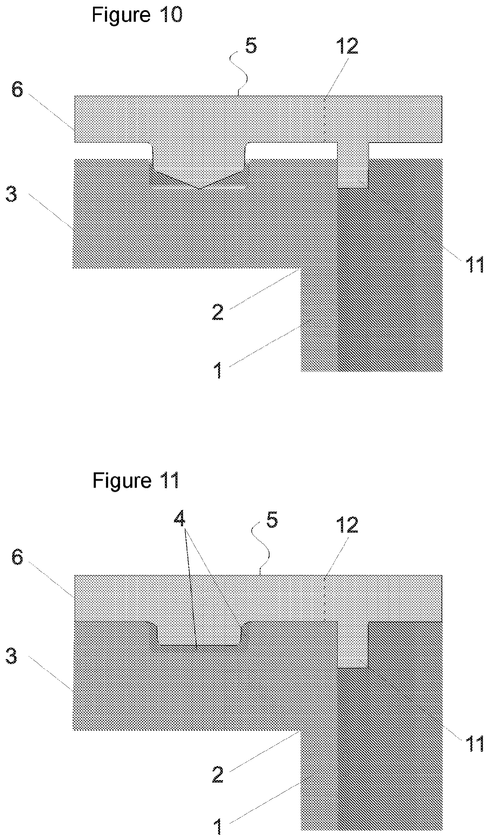

Figure 10 presents an enlarged view showing the recess of the container flange and the projection of the lid, before ultrasonic welding occurs.
Figure 11 presents an enlarged view showing the recess of the container flange and the projection of the lid, after ultrasonic welding occurs.

### DETAILED DESCRIPTION OF THE INVENTION

According to the attached figures, the present application is formed by a container (1) with upper edge (2) equipped with a smooth and straight flange (3) that projects outward contouring the entire upper extension of said upper edge (2).

The closure lid (5) in its upper part presents a flange (6) that encircles its entire extension and its width limited by the lowering step (7) where a lowered plane (8) is projected equipped with an unevenness defined by a lowered housing (9) for positioning the ring (10) integral to the surface of the lowered plane (8).

In the constructive variant, the lid (5) presents a projection (13) that encircles the entire extension of its flange (6), projected to fit with light pressure in the recess (15) that encircles the entire extension of the container (1) flange.

In this alternative construction, the closure of the container (1) occurs after fitting the projection (13) of the lid (5) into the recess (15) of the container flange (3). After fitting, the lower external surface (14) of the lid (5) becomes aligned over the upper external surface (16) of the container for hermetic closure of the container (1), by ultrasonic welding, at the weld line (4).

The ultrasonic weld closure fuses the projection (13) into the recess (15), hermetically closing the container (1) with the lid (5).

The opening ring (10) is fixed in the lowered plane (8) within the lowered housing (9) and when pulled upward irreversibly breaks the weakening line (12).

The positioning of the ring (10) within the lowered housing (9) enables said ring (10) to remain level with the entire upper surface of the lowered plane (8) facilitating finger engagement.

The external part of the lid (5) forms a step (11) that contours the entire external circumference of the lowered plane (8).

This step (11) is projected to fit internally by light pressure in the upper edge (2) thus maintaining the container (1) entrance closed.

The weakening line (12) serves as a rupture point so that the lid (5) can be removed when the ring (10) is pulled upward.

The weakening line (12) completely encircles the center of the lid (5) flange (6). Optionally, the weakening line (12) may encircle only 70% to 90% of the center of the lid (5) flange (6), and this will be defined according to the manufacturing and product utilization needs, not influencing the scope of the application.

The rupture point occurs only in the flange (6) near the lowering step (7).

After breaking the weakening line (12) and complete removal of the lid (5), it can be used again to close the container (1) mouth. This closure is possible because after breaking the weakening line (12) a small extension of the flange (6) remains attached to the lowering step (7), enabling the lid (5) to be fitted again, closing the container (1), but now no longer hermetically.

The hermetic closure of the container (1) occurs with the alignment of the flange (3) with the overlapping seating of the lid (5) flange (6), after this alignment and seating the flange (3) and flange (6) receive the weld line (4) for ultrasonic weld closure that concentrate the ultrasound energy in the weld line (4). That is, in the weld line (4) fusion occurs between the container flange (3) and lid flange (6) for hermetic closure of the container (1).

The heat necessary for ultrasonic sealing is generated within the materials only between the flange (3) and flange (6) creating the weld line (4) precisely.

The depth of thermoplastic melting by the ultrasonic vibration process will preferably be superficial and may vary according to the characteristics of the chosen plastic as well as the thickness of the chosen flange (3) and flange (6).

The weld line (4) occurs at a specific point that encircles the entire extension of said container flange (3) and lid flange (6), so that the container (1) is hermetically closed.

The opening of the container (1) occurs manually with manual action when the ring (10) is pulled upward, at this moment at the rupture point of the weakening line (12) which occurs only in the flange (6) positioned in the upper part is divided into two parts with one part of the flange (6) encircling the entire circumference of the lid (5) and the other part remaining welded to the container (1) flange (3).

The closure after opening occurs in the fitting of the lid (5) in the container (1), at this moment the part of the flange (6) that remained welded to the flange (3) realigns with the edge (6) of the lid (5).

The shape of the container (1) lid (5) and the form and ultrasonic welding line made it possible to create a hermetically closed container that after its opening can be used again several times, solving the previously highlighted problems thus obtaining speed in the production process, cost reduction and reduction in the disposal of parts previously used as hermetic sealing.

## Claims

1. "PACKAGING HAVING A HERMETIC CLOSURE WITH A SINGLE DETACHABLE SEAL JOINED BY ULTRASONIC WELDING", comprised of a container (1) with upper edge (2) which is **characterized by**:
- being hermetically closed by ultrasonic welding;
- the hermetic closure between the container (1) and the lid by ultrasonic welding being at the weld line (4) and occurring throughout the entire extension of said smooth and straight flange (3) of the container and the flange (6) of the lid (5);
- the weakening line (12) being the rupture point for opening the lid (5) and encircling the entire extension of the center of the lid (5) flange (6);
- the rupture point of the weakening line (12) occurring only in the flange (6) near the lowering step (7);
- the rupture point of the weakening line (12) dividing the flange (6) into two parts with one part of the flange (6) encircling the entire circumference of the lid (5) and the other part remaining welded to the flange (3);
- the container (1) being equipped with smooth and straight flange (3) that projects outward contouring the entire upper extension of said upper edge (2);
- the closure lid (5) in its upper part presenting flange (6) that encircles its extension with width limited by the lowering step (7) that projects to the lowered plane (8) equipped with an unevenness defined by a lowered housing (9) for positioning the ring (10) level with the surface of the lowered plane (8);
- the external part of the lid (5) forming a step (11) that contours the entire external circumference of the lowered plane (8);
- the step (11) being projected to fit internally in the upper edge (2).

2. "PACKAGING HAVING A HERMETIC CLOSURE WITH A SINGLE DETACHABLE SEAL JOINED BY ULTRASONIC WELDING", according to claim 1, **characterized by**:
- the lid (5) presenting a projection (13) that encircles the entire extension of its flange (6), for fitting in the recess (15) that encircles the entire extension of the container (1) flange (3), aligning the lower external surface (14) of the lid (5) over the upper external surface (16) of the container (1) for hermetic closure by ultrasonic welding at the weld line (4).

3. "PACKAGING HAVING A HERMETIC CLOSURE WITH A SINGLE DETACHABLE SEAL JOINED BY ULTRASONIC WELDING", according to claim 1, **characterized by**:
- the weakening line (12) encircling 70% to 90% of the center of the lid (5) flange (6).
